# DEMANDE DE BREVET EUROPEEN

(11) **EP 3 926 566 A1**
(43) Date de publication de la demande: **22.12.2021**
(21) Numéro de dépôt: 21177583.8
(22) Date de dépôt: 03.06.2021
(51) Int. Cl.: G06Q 20/24, G06Q 20/10, G06Q 20/02, G06Q 20/42

(54) **VALIDATION D'UNE TRANSACTION RELATIVE A UNE OFFRE D'UN BIEN OU D'UN SERVICE À UN UTILISATEUR**

(30) Priorité: 15.06.2020 FR 2006206
(71) Demandeur: ORANGE, 92130 Issy-les-Moulineaux (FR)
(72) Inventeur: HEMERY, Baptiste François, 92326 CHATILLON (FR); JEANNE, Fabrice, 92326 CHATILLON (FR); DELEFORTERIE, Céline, 92326 CHATILLON (FR)

(57) **Abrégé**

L'invention concerne un procédé de validation d'une transaction relative à une offre d'un bien ou d'un service à au moins un utilisateur, une facture ayant été générée pour ladite offre, dans lequel ledit procédé est mis en œuvre dans un terminal associé audit utilisateur, caractérisé en ce qu'il comprend ce qui suit, de manière différée par rapport à ladite offre :
- accéder (S102₁), via un réseau de communication, à un dispositif de facturation, à l'aide d'un identifiant associé à un ensemble de factures comprenant ladite facture, les factures dudit ensemble étant relatives à des biens ou des services offerts audit utilisateur par un même fournisseur sur un certain laps de temps,
- requérir (S104₁) auprès du dispositif de facturation le paiement d'au moins ladite facture, en prenant en compte ledit identifiant, un mode de paiement, et un montant inscrit sur ladite au moins une facture.

## Description

### Domaine de l'invention

La présente invention se rapporte de manière générale au domaine des technologies utilisées pour la mise en œuvre de services de paiement, et notamment de services de monnaie numérique, de paiement mobile, de paiement prépayé, par carte ou non. Elle concerne plus particulièrement la validation d'une transaction relative à une offre d'un bien ou d'un service à un utilisateur, de manière différée par rapport à ladite offre, ainsi que le suivi de facturation correspondant.

### Art antérieur

Dans le cadre de ventes de biens et/ou de services, une relation de confiance peut s'établir entre un client régulier et son fournisseur. Le fournisseur peut alors autoriser ce client à payer un ou plusieurs de ses achats en différé, lors d'une prochaine rencontre physique. Par exemple, le client pourra payer l'ensemble des achats qu'il réalise régulièrement chez son fournisseur, seulement à la fin du mois, et non à l'acte. A cet effet, le fournisseur doit garder une trace des biens/services acquis par le client dans une liste généralement au format papier (un carnet, des feuilles adhésives repositionnables, etc.). L'avantage de ce genre de pratique est la réduction du temps lié au paiement.

Toutefois, un tel paiement en différé n'offre aucune sécurité pour le fournisseur. En effet le paiement en différé dépend du bon vouloir du client, ce qui peut entraîner des impayés si le client décide de ne pas payer son fournisseur. Par ailleurs, le fournisseur doit s'astreindre à un mécanisme de contrôle et de suivi des achats effectués par le client, qu'il soit manuel ou informatique, ce qui demeure compliqué et fastidieux pour le fournisseur, celui-ci risquant de perdre les factures qu'il a éditées ou encore de ne pas savoir bien utiliser les logiciels de facturation existants pour effectuer un tel contrôle et un tel suivi.

### Objet et résumé de l'invention

Un des buts de l'invention est de remédier à des inconvénients de l'état de la technique précité en proposant un mécanisme de traçage automatisé des achats d'un utilisateur auprès d'un même fournisseur et de contrôle du bon déroulement du paiement de ces achats, grâce à des interactions de communication entre les différents moyens de communication suivants :
- un dispositif de facturation,
- un terminal de communication associé à au moins un utilisateur qui réalise les achats,
- un terminal de communication associé à un fournisseur auprès duquel cet utilisateur effectue ses achats.

A cet effet, un objet de la présente invention concerne un procédé de validation d'une transaction relative à une offre d'un bien ou d'un service à au moins un utilisateur, une facture ayant été générée pour l'offre, dans lequel le procédé est mis en œuvre dans un terminal associé à l'utilisateur.

Un tel procédé est remarquable en ce qu'il comprend ce qui suit, de manière différée par rapport à l'offre :
- accéder, via un réseau de communication, à un dispositif de facturation, à l'aide d'un identifiant associé à un ensemble de factures comprenant ladite facture, les factures dudit ensemble étant relatives à des biens ou des services offerts à l'utilisateur par un même fournisseur sur un certain laps de temps,
- requérir auprès du dispositif de facturation le paiement d'au moins ladite facture, en prenant en compte ledit identifiant, un mode de paiement, et un montant inscrit sur ladite au moins une facture.

Grâce à l'invention, un utilisateur qui s'est procuré des biens ou des services auprès d'un même fournisseur de façon cumulée au fil du temps, sans avoir payé ces biens ou ces services, a la possibilité de payer ultérieurement la totalité ou une partie seulement des biens ou des services qui lui ont été procurés, par l'intermédiaire d'une interaction de communication entre un terminal de l'utilisateur et un dispositif de facturation ayant stocké préalablement l'ensemble des factures relatives à la fourniture de ces biens et/ou services à l'utilisateur.

Pour l'utilisateur débiteur, une telle interaction permet une gestion simplifiée du paiement de ses achats auprès d'un même fournisseur. En effet, le fait de valider en différé les transactions relatives à ses achats via un serveur qui centralise les factures liant l'utilisateur à un même fournisseur, évite à l'utilisateur de passer trop de temps dans le magasin/boutique/point de vente de ce fournisseur, pour régler ses achats. Une telle gestion simplifiée du paiement des achats apporte en outre une plus grande sécurité au fournisseur pour lequel les risques d'impayés sont diminués, ainsi qu'un suivi plus simple et plus fiable de sa facturation.

Selon un mode de réalisation particulier, ladite au moins une facture faisant partie d'une pluralité de factures à payer dans ledit ensemble, ladite requête de paiement prend en compte ledit identifiant, ledit mode de paiement pour certaines des factures à payer de ladite pluralité, le montant cumulé desdites certaines factures, et au moins un autre mode de paiement pour les autres factures à payer de ladite pluralité, ainsi que le montant cumulé desdites autres factures.

Ce mode de réalisation autorise avantageusement l'utilisateur à utiliser des moyens de paiement fractionnés pour le paiement en différé des factures qui le lient à un même fournisseur.

Selon un autre mode de réalisation particulier, ladite au moins une facture faisant partie d'une pluralité de factures à payer dans ledit ensemble, le procédé
comprend ce qui suit au niveau d'un terminal associé à un autre utilisateur partageant avec ledit utilisateur le paiement des factures dudit ensemble :
- accéder au dispositif de facturation, via un réseau de communication, à l'aide dudit identifiant ou bien d'un autre identifiant associé audit ensemble de factures, ledit identifiant ou ledit autre identifiant étant associé audit autre utilisateur,
- requérir auprès du dispositif de facturation le paiement d'au moins une autre facture dudit ensemble, différente de ladite au moins une facture, en prenant en compte ledit identifiant ou ledit autre identifiant, un mode de paiement associé à ladite au moins une autre facture, et un montant inscrit sur ladite au moins une autre facture.

Ce mode de réalisation permet avantageusement à au moins deux utilisateurs de partager le règlement de leurs achats effectués en commun auprès d'un même fournisseur de biens ou de services.

Selon encore un autre mode de réalisation particulier, l'instant de déclenchement de l'action de requérir un paiement auprès du dispositif de facturation est paramétrable dans le dispositif de facturation.

Ce mode de réalisation permet avantageusement à l'utilisateur de choisir une date préférentielle d'envoi de sa requête de paiement au dispositif de facturation. A cette date, le dispositif de facturation enverra une demande de paiement au terminal de l'utilisateur, ce qui déclenchera l'envoi automatique, par le terminal, de la requête de paiement au dispositif de facturation. De cette manière, le paiement du/des facture(s) que l'utilisateur doit au fournisseur peut ainsi être automatisé, ce qui limite le risque d'impayés pour le fournisseur.

Selon encore un autre mode de réalisation particulier, ledit ensemble de factures étant associé à un identifiant d'un fournisseur ayant fourni le bien ou le service audit au moins un utilisateur, il comprend ce qui suit au niveau du dispositif de facturation :
- recevoir en provenance d'un terminal associé audit fournisseur, via un réseau de communication, un message indiquant que le paiement de ladite au moins une facture ou desdites factures dudit ensemble a été effectué auprès dudit fournisseur,
- mettre à jour ledit ensemble de factures, distinguant le ou les factures encore à payer de ladite au moins une facture ou desdites factures payées.

Ce mode de réalisation autorise avantageusement une centralisation, au niveau du dispositif de facturation, de la facturation et du suivi de cette dernière, sans que ni le fournisseur, ni l'utilisateur ou ceux qui partagent avec lui le paiement des factures, n'aient à intervenir dans de telles opérations, ce qui représentent un gain de temps dans le traitement de leur(s) facture(s).

Les différents modes ou caractéristiques de réalisation précités peuvent être ajoutés indépendamment ou en combinaison les uns avec les autres, au procédé de validation d'une transaction défini ci-dessus.

L'invention concerne également un terminal de communication pour mettre en œuvre la validation d'une transaction relative à une offre d'un bien ou d'un service à au moins un utilisateur, une facture ayant été générée pour l'offre, le terminal étant associé audit utilisateur et comprenant un processeur qui est configuré pour mettre en œuvre ce qui suit, de manière différée par rapport à l'offre :
- accéder, via un réseau de communication, à un dispositif de facturation, à l'aide d'un identifiant associé à un ensemble de factures comprenant ladite facture, les factures de l'ensemble étant relatives à des biens ou des services offerts à l'utilisateur par un même fournisseur sur un certain laps de temps,
- requérir auprès du dispositif de facturation le paiement d'au moins ladite facture, en prenant en compte ledit identifiant, un mode de paiement, et un montant inscrit sur ladite au moins une facture.

L'invention concerne également un dispositif de facturation comprenant une mémoire de stockage de factures.

Un tel dispositif est remarquable en ce qu'il comprend un processeur qui est configuré pour mettre en œuvre ce qui suit, de manière différée par rapport à une offre d'un bien ou d'un service à au moins un utilisateur par un fournisseur :
- générer une facture relative à l'offre, en réponse à une requête reçue en provenance d'un terminal associé au fournisseur, la requête contenant un identifiant dudit au moins un utilisateur et un identifiant du fournisseur,
- stocker la facture dans la mémoire, la facture étant ajoutée à un ensemble de factures qui sont relatives à des biens ou des services offerts audit au moins un utilisateur par le fournisseur pendant un certain laps de temps, ledit ensemble étant associé à un identifiant dépendant des identifiants reçus dans la requête,
- recevoir en provenance d'un terminal associé audit au moins utilisateur, via un réseau de communication :
   --une requête d'accès au dispositif de facturation, ladite requête d'accès comprenant l'identifiant associé audit ensemble,
      - une requête de paiement d'au moins ladite facture dudit ensemble, en prenant en compte l'identifiant associé audit ensemble, un mode de paiement, et un montant inscrit sur ladite au moins une facture,
- activer ledit paiement en réponse à la requête de paiement reçue.

L'invention concerne également un système de facturation, caractérisé en ce qu'il comprend le terminal de communication et le dispositif de facturation précités.

L'invention concerne encore un programme d'ordinateur comportant des instructions pour la mise en œuvre du procédé de validation d'une transaction selon l'invention, selon l'un quelconque des modes particuliers de réalisation décrits précédemment, lorsque ledit programme est exécuté par un processeur.

De telles instructions peuvent être stockées durablement dans un support mémoire non transitoire du terminal de communication mettant en œuvre le procédé de validation d'une transaction précité.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de validation d'une transaction précité.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
[Fig. 1] la figure 1 représente un système de facturation selon un premier mode de réalisation de l'invention, dans lequel est mis en œuvre le procédé de validation d'une transaction de l'invention,
[Fig. 2] la figure 2 représente un dispositif de facturation dans un mode de réalisation particulier de l'invention,
[Fig. 3] la figure 3 représente un terminal de communication associé à un fournisseur de bien et/ou de service, dans un mode de réalisation particulier de l'invention,
[Fig. 4] la figure 4 représente un terminal de communication associé à un utilisateur acquéreur d'un bien et/ou d'un service, dans un mode de réalisation particulier de l'invention,
[Fig. 5] la figure 5 représente les principales actions mises en œuvre dans une phase d'ajout de facture(s) qui précède le procédé de validation de transaction, selon un mode de réalisation particulier de l'invention,
[Fig. 6] la figure 6 représente les principales actions mises en œuvre dans une phase de validation de facture(s) qui précède le procédé de validation de transaction, selon un mode de réalisation particulier de l'invention,
[Fig. 7A] la figure 7A représente les principales actions mises en œuvre dans le procédé de validation de transaction, selon un premier mode de réalisation particulier de l'invention,
[Fig. 7B] la figure 7B représente les principales actions mises en œuvre dans le procédé de validation de transaction, selon un deuxième mode de réalisation particulier de l'invention,
[Fig. 7C] la figure 7C représente les principales actions mises en œuvre dans le procédé de validation de transaction, selon un troisième mode de réalisation particulier de l'invention.
[Fig. 8] la figure 8 représente un système de facturation selon un deuxième mode de réalisation de l'invention, dans lequel est mis en œuvre le procédé de validation d'une transaction de l'invention,
[Fig. 9] la figure 9 représente les principales actions mises en œuvre dans une phase de validation de facture(s) qui précède le procédé de validation de transaction, dans le système de facturation de la figure 8,
[Fig. 10A] la figure 10A représente les principales actions mises en œuvre dans le procédé de validation de transaction, selon un premier mode de réalisation particulier du système de facturation de la figure 8,
[Fig. 10B] la figure 7B représente les principales actions mises en œuvre dans le procédé de validation de transaction, selon un deuxième mode de réalisation du système de facturation de la figure 8.

### Description détaillée d'un premier mode de réalisation de l'invention

### Environnement architectural

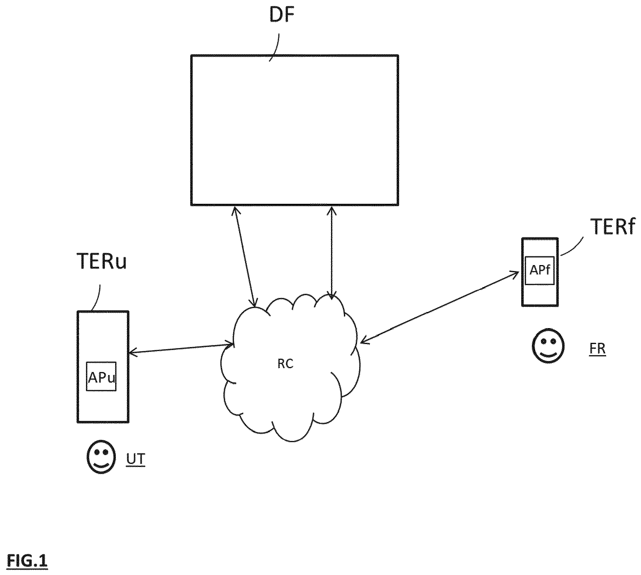

La figure 1 représente un environnement dans lequel est mis en œuvre le procédé de validation d'une transaction selon l'invention.

Un tel environnement comprend :
- un terminal de communication TERf associé à un fournisseur FR de produit(s) et/ou de service(s),
- un terminal de communication TERu associé à un utilisateur UT, client du fournisseur FR,
- un dispositif DF de facturation des achats effectués par l'utilisateur UT auprès du fournisseur FR.

Les terminaux TERu et TERf communiquent avec le dispositif de facturation DF via un réseau de communication RC. Il peut s'agir par exemple d'un réseau de type IP (abréviation anglaise de « Internet Protocol »), d'un réseau de type x-DSL (abréviation anglaise de « Digital Subscriber Line »), fibre ou encore 3G, 4G, 5G, etc. Sur la figure 1, le dispositif de facturation DF est représenté en tant qu'entité distincte du terminal TERf. Toutefois, selon une autre implémentation, le dispositif de facturation DF pourrait être intégré dans le terminal TERf pour former une seule entité.

A titre d'exemples non exhaustifs, les terminaux TERu et TERf sont :
- un téléphone portable, et/ou
- un smartphone (« téléphone intelligent »), et/ou
- une tablette, et/ou
- un ordinateur portable, et/ou
- un ordinateur personnel de type PC, et/ou
- etc....

Le terminal TERu comprend une application logicielle (ou programme applicatif) APu pour interagir avec le dispositif de facturation DF, l'application APu étant dédiée à la mise en œuvre du procédé de validation d'une transaction conformément à la présente invention. L'application APu est téléchargée dans le terminal TERu, par exemple en amont de l'exécution du procédé de validation d'une transaction.

Le terminal TERu est associé à un identifiant IDu tel que par exemple :
- une adresse (IP, publique),
- un identifiant type notif/push,
- une adresse e-mail de l'utilisateur UT,
- le numéro MSISDN (Mobile Station International Subscriber Directory Number) de l'utilisateur UT,
- le numéro IBAN (International Bank Account Number) de l'utilisateur UT,
- ou encore tout type d'identifiant, par exemple un identifiant généré par l'application APu.

Le terminal TERf comprend également une application logicielle (ou programme applicatif) correspondante APf pour interagir avec le dispositif de facturation DF, l'application APf étant dédiée à l'ajout de factures dans le dispositif de facturation DF, ainsi qu'au contrôle du suivi de ces factures, dans le cadre de la mise en œuvre du procédé de validation d'une transaction conformément à la présente invention.

L'application APf est téléchargée dans le terminal TERf, en amont de l'exécution du procédé de validation d'une transaction.

Le terminal TERf est associé à un identifiant IDf tel que par exemple :
- une adresse (IP, publique),
- un identifiant type notif/push,
- une adresse e-mail du fournisseur FR,
- le numéro MSISDN (Mobile Station International Subscriber Directory Number) du fournisseur FR,
- le numéro IBAN (International Bank Account Number) du fournisseur FR,
- ou encore tout type d'identifiant, par exemple un identifiant généré par l'application APf.

### Description d'un mode de réalisation du dispositif de facturation DF

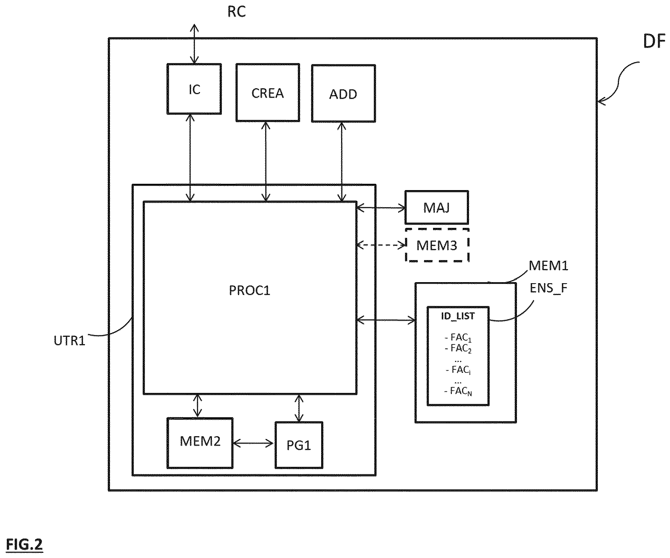

La figure 2 présente la structure simplifiée du dispositif de facturation DF. Il s'agit par exemple d'un serveur.

Un tel dispositif permet, de manière différée par rapport à l'acquisition d'un bien et/ou d'un service par l'utilisateur UT auprès du fournisseur FR :
- de générer, via le module CREA, un ensemble ou liste ENS_F de factures, l'ensemble ENS_F étant stocké dans une mémoire MEM1,
- d'ajouter, via le module ADD, au moins une facture FACᵢ (1≤i≤N) correspondant à l'acquisition d'un bien et/ou d'un service par l'utilisateur UT auprès du fournisseur FR, à l'ensemble ENS_F regroupant les factures relatives à l'acquisition auprès du fournisseur FR, par l'utilisateur UT, de bien(s) et/ou de service(s), pendant un certain laps de temps (par exemple, semaine, mois, année),
- de mettre à jour, via le module MAJ, le statut des factures (statut : à payer, payé, gratuit, etc...) de l'ensemble ENS_F de factures.

Dans le mode de réalisation représenté sur la figure 2, la mémoire MEM1 est intégrée au dispositif de facturation DF. En variante, la mémoire MEM1 pourrait être une base de données extérieure au dispositif de facturation DF et rendue accessible à ce dernier.

Dans le cas où l'utilisateur UT acquiert des biens et/ou des services auprès de plusieurs fournisseurs différents, la mémoire M1 peut bien sûr stocker plusieurs ensembles de factures en lien avec ces fournisseurs différents. Par ailleurs, dans le cas où le fournisseur FR vend des biens et/ou des services à plusieurs utilisateurs différents, la mémoire M1 peut bien sûr stocker plusieurs ensembles de factures en lien avec ces utilisateurs différents.

Le dispositif de facturation DF comprend également une interface de communication IC qui est adaptée pour communiquer, via le réseau de communication RC, avec le terminal TERu de l'utilisateur UT ou le terminal TERf du fournisseur FR, selon par exemple le protocole IP, x-DSL, fibre, 3G, 4G, 5G, etc., WiFi, CPL (« Courant Porteur en Ligne »), ou autres.

Ainsi, le dispositif de facturation DF est accessible :
- par l'utilisateur UT afin qu'il puisse consulter, valider/contester et régler les factures de l'ensemble de factures ENS_F,
- par le fournisseur FR afin qu'il puisse requérir auprès du dispositif DF l'ajout, dans l'ensemble ENS_F de factures, d'une facture relative à l'acquisition d'un bien et/ou d'un service par l'utilisateur UT, de consulter cet ensemble, et éventuellement de requérir le règlement de tout ou partie des factures de cet ensemble.

De manière optionnelle, le dispositif de facturation DF comprend une mémoire MEM3 dans laquelle sont stockées préalablement au déroulement du procédé de validation d'une transaction selon l'invention, certaines informations telles que par exemple :
- les coordonnées physique ou bancaire de l'utilisateur UT,
- le statut des factures,
- le ou les modes de paiement privilégiés par l'utilisateur UT,
- le type de notification que l'utilisateur UT souhaite recevoir en provenance du dispositif de facturation DF (par exemple, « aucune notification souhaitée », « notification de type SMS seulement », etc.).

Selon un mode particulier de réalisation de l'invention, les actions exécutées par le dispositif de facturation DF sont mises en œuvre par des instructions d'un programme d'ordinateur PG1. Pour cela, le dispositif DF a l'architecture classique d'un ordinateur et comprend notamment une mémoire MEM2, une unité de traitement UTR1, équipée par exemple d'un processeur PROC1, et pilotée par le programme d'ordinateur PG1 stocké en mémoire MEM2. Le programme d'ordinateur PG1 comprend des instructions pour effectuer les actions de génération de l'ensemble ENS_F de factures, d'ajout de factures à cet ensemble, et de mise à jour de cet ensemble, dans le cadre du procédé de validation d'une transaction qui va être décrit ci-dessous, lorsque le programme est exécuté par le processeur PROC1, selon l'un quelconque des modes particuliers de réalisation de l'invention.

A l'initialisation, les instructions de code du programme d'ordinateur PG1 sont par exemple chargées dans une mémoire RAM (non représentée) avant d'être exécutées par le processeur PROC1. Le processeur PROC1 de l'unité de traitement UTR1 met notamment en œuvre les actions précitées, selon les instructions du programme d'ordinateur PG1.

### Description d'un mode de réalisation du terminal de communication TERf

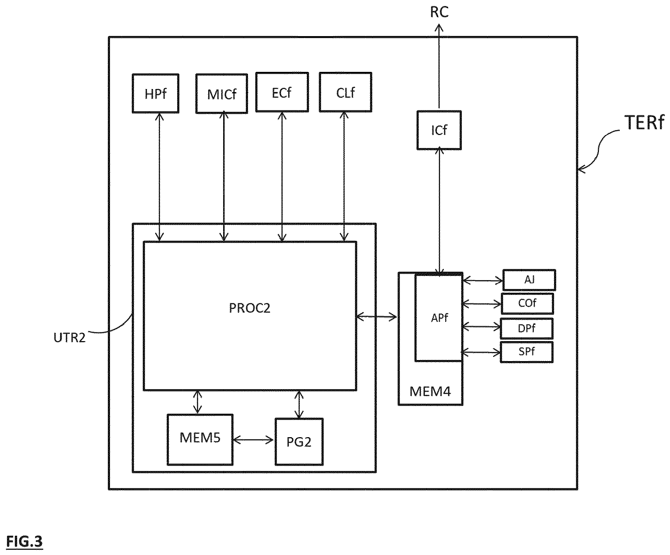

La figure 3 présente la structure simplifiée du terminal de communication TERf associé au fournisseur FR.

Le terminal de communication TERf comprend classiquement:
- un écran de visualisation ECf,
- un haut-parleur HPf,
- un microphone MICf,
- un clavier CLf.

Selon l'invention, le terminal TERf stocke dans une mémoire MEM4 l'application APf précitée.

L'application APf est composée des briques logicielles suivantes :
- une interface AJ d'ajout d'au moins une facture FACᵢ à l'ensemble ENS_F de factures,
- une interface COf de consultation de l'ensemble ENS_F de factures,
- une interface DPf de demande de paiement de tout ou partie des factures FAC₁ à FAC_{N} de l'ensemble ENS_F de factures,
- une interface SPf de saisie des préférences,
- une interface ICf de communication avec le dispositif de facturation DF, l'interface ICf étant adaptée pour fonctionner selon par exemple le protocole IP, x-DSL, fibre, 3G, 4G, 5G, etc., WiFi, CPL, ou autres.

Dans un mode de réalisation particulier, l'application APf pourrait être directement intégrée dans une application de facturation existante, telle que par exemple un logiciel de caisse.

Selon un mode particulier de réalisation de l'invention, les actions exécutées par l'application APf, dans le cadre de la mise en œuvre du procédé de validation d'une transaction conformément à la présente invention, sont mises en œuvre par des instructions d'un programme d'ordinateur PG2. Pour cela, le terminal TERf a l'architecture classique d'un ordinateur et comprend notamment une mémoire MEM5, une unité de traitement UTR2, équipée par exemple d'un processeur PROC2, et pilotée par le programme d'ordinateur PG2 stocké en mémoire MEM5. Le programme d'ordinateur PG2 comprend des instructions pour mettre en œuvre les actions exécutées par l'application APf, lorsque le programme est exécuté par le processeur PROC2, selon l'un quelconque des modes particuliers de réalisation de l'invention.

A l'initialisation, les instructions de code du programme d'ordinateur PG2 sont par exemple chargées dans une mémoire RAM (non représentée) avant d'être exécutées par le processeur PROC2. Le processeur PROC2 de l'unité de traitement UTR2 met notamment en œuvre les actions d'ajout de factures dans le dispositif de facturation DF, ainsi que de contrôle du suivi de ces factures, selon les instructions du programme d'ordinateur PG2.

### Description d'un mode de réalisation du terminal de communication TERu

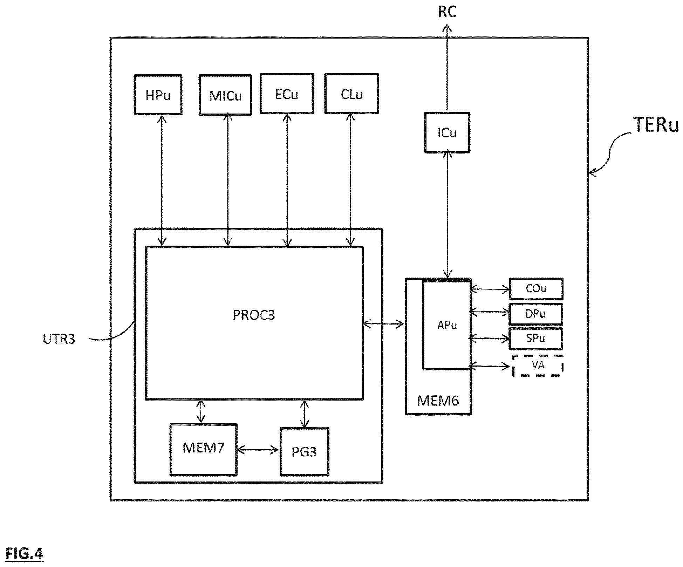

La figure 4 présente la structure simplifiée du terminal de communication TERu associé à l'utilisateur UT.

Le terminal de communication TERu comprend classiquement:
- un écran de visualisation ECu,
- un haut-parleur HPu,
- un microphone MICu,
- un clavier CLu.

Selon l'invention, le terminal TERu stocke dans une mémoire MEM6 l'application APu précitée.

L'application APu est composée des briques logicielles suivantes :
- une interface COu de consultation de l'ensemble ENS_F de factures,
- une interface DPu de demande de paiement de tout ou partie des factures FAC₁ à FAC_{N} de l'ensemble ENS_F de factures,
- une interface SPu de saisie des préférences,
- une interface ICu de communication avec le dispositif de facturation DF, l'interface ICu étant adaptée pour fonctionner selon par exemple le protocole IP, x-DSL, fibre, 3G, 4G, 5G, etc., WiFi, CPL, ou autres,
- optionnellement, une interface VA de validation d'au moins une facture FACᵢ de l'ensemble ENS_F de facture.

Dans un mode de réalisation particulier, l'application APu pourrait être directement intégrée dans une application de paiement spécifique, installée sur le terminal TERu. L'interface VA étant optionnelle, elle est représentée en pointillé sur la figure 4.

Selon un mode particulier de réalisation de l'invention, les actions exécutées par l'application APu, dans le cadre de la mise en œuvre du procédé de validation d'une transaction conformément à la présente invention, sont mises en œuvre par des instructions d'un programme d'ordinateur PG3. Pour cela, le terminal TERu a l'architecture classique d'un ordinateur et comprend notamment une mémoire MEM5, une unité de traitement UTR2, équipée par exemple d'un processeur PROC3, et pilotée par le programme d'ordinateur PG3 stocké en mémoire MEM7. Le programme d'ordinateur PG3 comprend des instructions pour mettre en œuvre les actions exécutées par l'application APu, lorsque le programme est exécuté par le processeur PROC3, selon l'un quelconque des modes particuliers de réalisation de l'invention.

A l'initialisation, les instructions de code du programme d'ordinateur PG3 sont par exemple chargées dans une mémoire RAM (non représentée) avant d'être exécutées par le processeur PROC3. Le processeur PROC3 de l'unité de traitement UTR3 met en œuvre la gestion des factures FAC₁ à FAC_{N} par l'utilisateur UT, et plus particulièrement les actions de validation d'une transaction auprès du dispositif de facturation DF, selon les instructions du programme d'ordinateur PG3.

### Description d'un mode de réalisation d'une phase préalable d'ajout de facture(s)

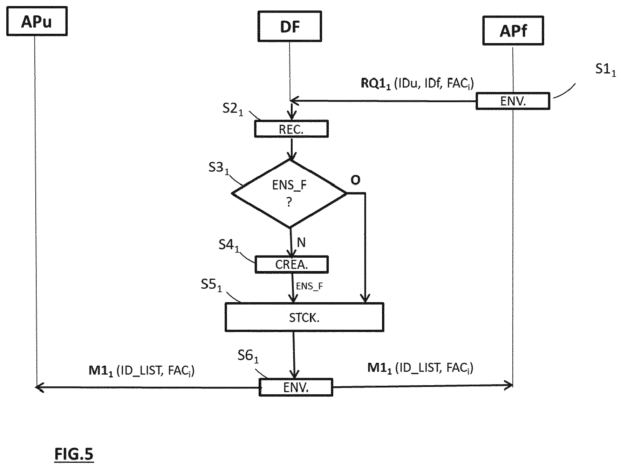

En référence à la figure 5, on décrit maintenant le déroulement d'un procédé d'ajout d'au moins une facture FACᵢ selon un mode de réalisation de l'invention, mis en œuvre dans le système de facturation de la figure 1.

L'utilisateur UT et le fournisseur FR se sont préalablement inscrits auprès du dispositif de facturation DF. Une telle inscription est mise en œuvre classiquement, via par exemple une page Internet dédiée. Au cours de cette inscription, l'utilisateur UT et le fournisseur FR ont fourni au dispositif DF leurs identifiants respectifs IDu et IDf, lesquels ont été stockés dans le dispositif DF, par exemple dans la mémoire M1 (figure 2).

Le procédé d'ajout de facture est mis en œuvre de manière différée par rapport à l'acquisition d'un bien et/ou d'un service acquis par l'utilisateur UT auprès du fournisseur FR de ce bien et/ou service.

Dans le contexte de l'invention, le bien et/ou le service acquis n'est pas payé par l'utilisateur UT au moment de son acquisition.

Selon un exemple, l'utilisateur UT s'est rendu physiquement chez le fournisseur FR pour acquérir le bien et/ou le service. Selon un autre exemple, l'utilisateur UT a acquis le bien et/ou le service à distance, par exemple via un site Web du fournisseur FR.

Lors de cette acquisition, l'utilisateur UT a partagé avec le fournisseur FR un identifiant, tel que par exemple un des identifiants IDu précités, ou bien une variante à usage unique décodable par le dispositif de facturation DF.

Un tel partage peut se faire des plusieurs façons: de vive voix, ou bien via le terminal TERu, par un élément visuel, tel que par exemple un code-barres, un code QR (abréviation anglaise de « Quick Response »), etc., ou encore par tout autre canal de communication, par exemple NSDT (abréviation anglaise de « Near Sound Data Transfer »), NFC (abréviation anglaise de « Near Field Communication »).

Une fois ces prérequis effectués, le procédé d'ajout de facture(s) comprend ce qui suit.

En S1₁, le terminal TERf envoie, via le réseau RC, au dispositif DF, au moyen de l'interface ICf, une requête RQ1₁ d'enregistrement de la facture FACᵢ correspondant à l'acquisition d'un bien et/ou du service par l'utilisateur UT. A cet effet, le fournisseur FR active l'interface d'ajout AJ, saisit son identifiant IDf, l'identifiant IDu préalablement communiqué par l'utilisateur UT lors de l'acquisition, et sélectionne la facture FACᵢ.

En S2₁, le dispositif DF reçoit la requête RQ1₁, via l'interface IC.

En S3₁, le dispositif DF vérifie, à partir des identifiants IDu et IDf reçus, si l'ensemble ENS_F est déjà stocké dans ma mémoire M1.

Si l'ensemble ENS_F n'est pas encore stocké, en S4₁, le dispositif DF génère dans la mémoire M1, via le module CREA, un ensemble ENS_F, en lui affectant un identifiant ID_LIST qui est fonction des identifiants IDu et IDf reçus dans la requête.

En S5₁, le dispositif DF ajoute la facture FACᵢ reçue, via son module ADD, à l'ensemble ENS_F, en lui associant le statut « à payer ».

Si l'ensemble ENS_F est déjà stocké en mémoire M1, l'étape S5₁ est directement mise en œuvre à l'issue de l'étape S3₁.

En S6₁, le dispositif DF envoie aux terminaux TERu et TERf, via le réseau RC, au moyen de son interface IC, un message M1₁ notifiant respectivement l'utilisateur UT et le fournisseur FR, qu'une facture FACᵢ a été ajoutée à l'ensemble ENS_F. Le message M1₁ contient à cet effet l'identifiant ID_LIST et un identifiant de la facture FACᵢ. Le message M1₁ contient éventuellement le statut « à payer » de la facture FACᵢ.

Dans le cas où l'étape S4₁ est mise en œuvre, le dispositif DF pourrait par exemple notifier dans un premier temps à l'utilisateur UT et au fournisseur FR qu'un ensemble de factures ENS_F a été créé, puis notifier dans un deuxième temps que la facture FACᵢ a été ajoutée à l'ensemble ENS_F.

Un tel procédé permet un gain de temps pour le fournisseur FR dans la gestion de ses factures (contrôle et suivi). Ce dernier peut ainsi :
- passer plus de clients en caisse en un temps donné,
- avoir plus de temps à consacrer à d'autres utilisateurs (conseils sur un bien, réalisation du service, etc.) ou à d'autres utilisateurs qui ne disposent pas de l'application APu.

De ce fait, il en résulte une meilleure satisfaction des utilisateurs, avec une probabilité plus élevée qu'ils reviennent faire leurs achats chez le fournisseur FR, plutôt que chez un autre fournisseur.

En outre, dans le cas où l'application APf est téléchargée dans un logiciel de caisse, il est possible, pour le fournisseur FR, à l'aide du logiciel de caisse, de non seulement scanner/enregistrer les produits/services consommés par l'utilisateur UT dans le logiciel de caisse, mais aussi d'envoyer la/les facture(s) correspondantes au dispositif de facturation DF, via le réseau de communication RC, sans avoir, du coup, à changer de logiciel. La tâche de gestion des factures par le fournisseur FR, centralisée uniquement dans le logiciel de caisse, est donc grandement facilitée.

### Description d'un mode de réalisation d'une phase préalable de validation de facture(s)

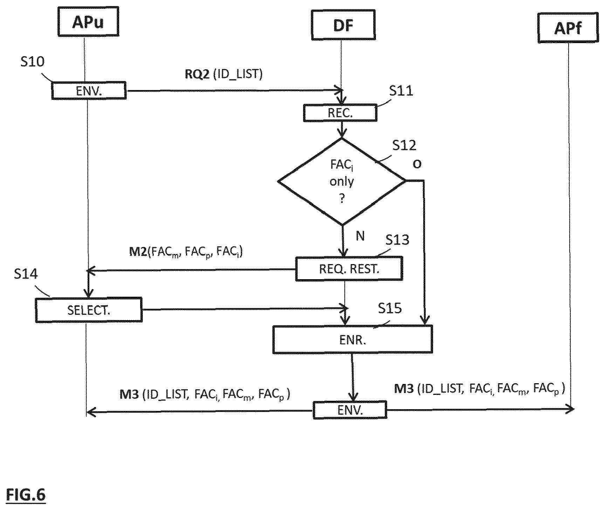

En référence à la figure 6, on décrit maintenant le déroulement d'un procédé de validation de factures selon un mode de réalisation de l'invention, mis en œuvre dans le système de facturation de la figure 1.

Un tel procédé est optionnel, l'utilisateur UT pouvant directement passer à la validation de la transaction. En effet, selon une implémentation particulière, l'utilisateur UT pourrait, au moyen de son terminal TERu, via l'interface de saisie des préférences SPu, requérir auprès du dispositif DF de valider automatiquement les factures ajoutées à l'ensemble ENS_F.

Dans le cas où le procédé de validation de facture(s) est mis en œuvre, en S10, le terminal TERu envoie, via le réseau RC, au dispositif DF, au moyen de l'interface ICu, une requête RQ2 de validation d'au moins la facture FACᵢ. A cet effet, l'utilisateur UT active l'interface de validation VA, et saisit l'identifiant ID_LIST.

En S11, le dispositif DF reçoit la requête RQ2, via l'interface IC.

En S12, le dispositif DF vérifie dans l'ensemble ENS_F si la facture FACᵢ est la seule ou non à être dans le statut « à payer ».

Si plusieurs autres factures sont dans le statut « à payer », le dispositif DF envoie en S13 au terminal TERu un message M2 indiquant la liste des factures à payer, dont la facture FACᵢ. Dans l'exemple représenté, trois factures FACₘ, FACₚ et FACᵢ sont à payer, tel que 1≤m≤N et 1≤p≤N.

En S14, l'utilisateur UT accède aux factures FACₘ, FACₚ et FACᵢ via l'interface COu de l'application APu, et sélectionne, via l'interface VAL, la facture FACᵢ, et éventuellement la facture FACₘ et/ou la facture FACp qui sont à payer, en tant que facture(s) à valider. L'acte de sélection correspond ici à une validation, par l'utilisateur UT, de la reconnaissance de dettes que ce dernier a vis-à-vis du fournisseur FR.

En S15, le dispositif DF enregistre la validation de la facture FACᵢ et éventuellement des factures FACₘ et/ou FACp, si elles ont été sélectionnées.

En S16, le dispositif DF envoie aux terminaux TERu et TERf, via le réseau RC, au moyen de son interface IC, un message M3 notifiant respectivement l'utilisateur UT et le fournisseur FR, que la facture FACᵢ et éventuellement les factures FACₘ et FACₚ a/ont été validée(s) par l'utilisateur UT.

Si à l'issue de l'étape S12, seule la facture FACᵢ est dans le statut à « payer », le dispositif DF passe directement à l'enregistrement S15 de la validation de la facture FACᵢ.

### Description d'un premier mode de réalisation d'un procédé de validation d'une transaction

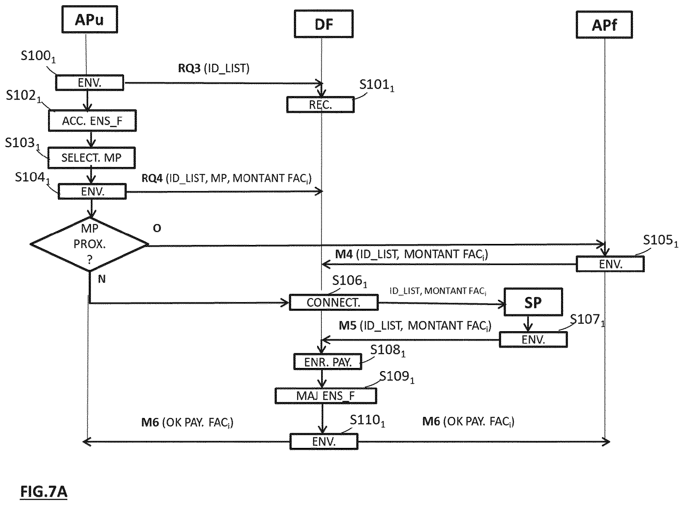

En référence à la figure 7A, on décrit maintenant le déroulement d'un procédé de validation d'une transaction selon un premier mode de réalisation de l'invention, mis en œuvre dans le système de facturation de la figure 1.

Dans l'exemple illustré, la validation de la transaction correspond au paiement d'une seule facture FACᵢ de l'ensemble de factures ENS_F, parmi d'autres factures à payer.

En S100₁, le terminal TERu envoie, via le réseau RC, au dispositif DF, au moyen de l'interface ICu, une requête RQ3 de paiement de la facture FACᵢ. A cet effet, l'utilisateur UT active l'interface de consultation COu, et saisit l'identifiant ID_LIST. L'envoi d'une telle requête RQ3 est ici mis en œuvre à l'initiative de l'utilisateur UT, au moyen du terminal TERu.

D'autres implémentations sont bien entendu possibles, rendant le système de facturation selon l'invention particulièrement flexible d'un point de vue utilisation. La requête RQ3 peut par exemple être envoyée en réponse à une requête du dispositif DF demandant à l'utilisateur UT de payer sa facture. L'envoi de la requête par le dispositif DF au terminal TERu peut être déclenché sur requête du terminal TERf. A cet effet, le fournisseur FR ayant consulté auprès du dispositif DF, via l'interface COf, les factures à payer dans l'ensemble ENS_F, peut activer l'interface de demande de paiement DPf pour requérir auprès du dispositif DF que ce dernier envoie une requête en demande de paiement au terminal TERu. Dans une implémentation particulière, au moyen de l'interface SPf de saisie des préférences, le fournisseur FR peut même configurer le dispositif DF pour que, à un instant décidé par le fournisseur FR (demande immédiate, demande récurrente hebdomadaire, demande mensuelle...), le dispositif DF envoie automatiquement au terminal TERu la requête en demande de paiement. Dans une autre implémentation particulière, c'est l'utilisateur UT qui configure le dispositif DF pour déclencher automatiquement l'envoi de la requête de paiement RQ3 au dispositif de facturation DF à un instant décidé par l'utilisateur UT. A cet effet, l'utilisateur UT ayant consulté auprès du dispositif DF, via l'interface COu, les factures à payer dans l'ensemble ENS_F, peut activer l'interface de saisie des préférences SPu pour requérir auprès du dispositif DF que ce dernier envoie une requête en demande de paiement de la facture FACᵢ au terminal TERu. L'utilisateur UT peut configurer le dispositif DF pour que, à un instant décidé par l'utilisateur UT (ex : le jour où la facture FACᵢ est enregistrée dans le dispositif DF, un jour fixé dans la semaine ou dans le mois, etc.), le dispositif DF envoie automatiquement au terminal TERu la requête en demande de paiement, de manière à déclencher automatiquement l'envoi, par le terminal TERu au dispositif DF, de la requête de paiement RQ3.

Ce type de configuration permet ainsi avantageusement, pour le fournisseur FR, de limiter le risque d'impayés, et pour l'utilisateur UT, des oublis dans le paiement de ses factures.

En S101₁, le dispositif DF reçoit la requête RQ3, via l'interface IC.

En S102₁, l'utilisateur UT accède, via l'interface COu de l'application APu, à l'ensemble de factures ENS_F comprenant notamment la facture FACᵢ dans le statut « à payer ».

En S103₁, l'utilisateur UT sélectionne un mode de paiement MP au moyen de l'interface SPu.

Une telle sélection peut bien sûr être paramétrée par l'utilisateur UT avant même le déroulement du procédé de validation de la transaction, en tant que prérequis.

En S104₁, au moyen de l'interface DPu, l'utilisateur UT envoie au dispositif DF une requête RQ4 d'activation du paiement de la facture FACᵢ, ladite requête RQ4 contenant l'identifiant ID_LIST, le montant de la facture FACᵢ et le mode de paiement MP sélectionné.

Si le mode de paiement MP est de proximité, tel que par exemple le paiement en liquidités, chèque, carte bancaire, tickets restaurant, ou tout autre moyen de paiement à disposition du fournisseur FR, une fois que l'utilisateur UT a payé la facture FACᵢ à l'aide de ce mode de paiement, en S105₁, le terminal TERf envoie au dispositif DF, via le réseau RC, au moyen de son interface ICf, un message M4 notifiant la validation du paiement du montant de la facture FACᵢ, le message M4 contenant l'identifiant ID_LIST et le montant de la facture FACᵢ.

Si le mode de paiement MP est distant, tel que par exemple virement, prélèvement, paiement distant par carte bancaire, paiement 3D Secure, paiement via une facture d'abonnement téléphonique, paiement de mobile à mobile ou tout autre moyen de paiement distant spécifique, en S106₁, le dispositif DF met le terminal TERu en relation avec un serveur de paiement SP pour effectuer le paiement distant en communiquant au serveur de paiement SP l'identifiant ID_LIST et le montant de la facture FACᵢ.

En S107₁, le serveur de paiement SP envoie au dispositif DF un message M5 notifiant la validation du paiement du montant de la facture FACᵢ, le message M5 contenant l'identifiant ID_LIST et le montant de la facture FACᵢ.

En S108₁, le dispositif DF enregistre le paiement effectué.

En S109₁, le dispositif DF active le module de mise à jour MAJ pour mettre à jour l'ensemble ENS_F, en faisant passer le statut « à payer » de la facture FACᵢ au statut « payé », et réactualise le montant dû pour les factures non encore payées dans l'ensemble ENS_F.

En S110₁, le dispositif DF envoie aux terminaux TERu et TERf, via le réseau RC, au moyen de son interface IC, un message M6 indiquant que le paiement de la facture FACᵢ a été effectué. Le message M6 contient à cet effet l'identifiant ID_LIST et un identifiant de la facture FACᵢ.

### Description d'un deuxième mode de réalisation d'un procédé de validation d'une transaction

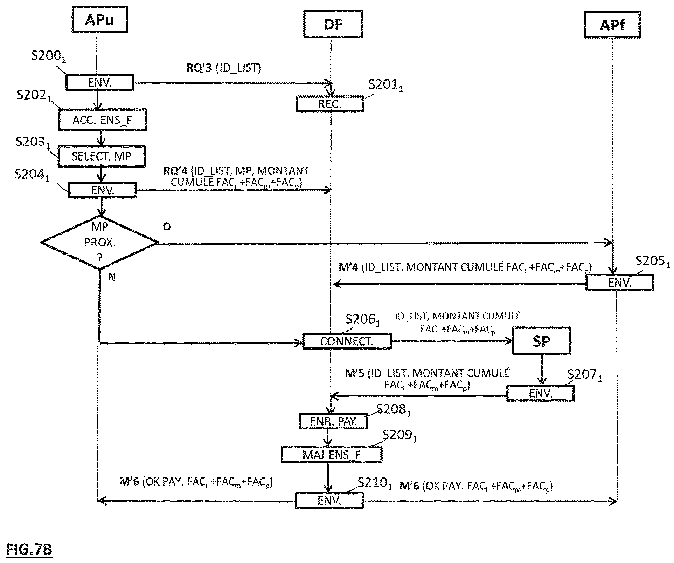

En référence à la figure 7B, on décrit maintenant le déroulement d'un procédé de validation d'une transaction selon un deuxième mode de réalisation de l'invention, mis en œuvre dans le système de facturation de la figure 1.

Dans l'exemple illustré, la validation de la transaction correspond au paiement de plusieurs factures dans le statut « à payer » de l'ensemble de factures ENS_F, par exemple les factures FACᵢ, FACₘ et FACₚ.

En S200₁, le terminal TERu envoie, via le réseau RC, au dispositif DF, au moyen de l'interface ICu, une requête RQ'3 de paiement du montant cumulé des factures FACᵢ, FACₘ et FACₚ. A cet effet, l'utilisateur UT active l'interface de consultation COu, et saisit l'identifiant ID_LIST.

L'envoi d'une telle requête RQ'3 est ici mis en œuvre à l'initiative de l'utilisateur UT, au moyen du terminal TERu. L'envoi de la requête RQ'3 peut être configuré comme décrit en relation avec le premier mode de réalisation précité.

En S201₁, le dispositif DF reçoit la requête RQ'3, via l'interface IC.

En S202₁, l'utilisateur UT accède, via l'interface COu de l'application APu, à l'ensemble de factures ENS_F comprenant notamment les factures FACᵢ, FACₘ et FACp dans le statut « à payer ».

En S203₁, l'utilisateur UT sélectionne un mode de paiement MP au moyen de l'interface SPu.

Une telle sélection peut bien sûr être paramétrée par l'utilisateur UT avant même le déroulement du procédé de validation de la transaction, en tant que prérequis.

En S204₁, au moyen de l'interface DPu, l'utilisateur UT envoie au dispositif DF une requête RQ'4 d'activation du paiement de la facture FACᵢ, ladite requête RQ'4 contenant l'identifiant ID_LIST, le montant cumulé des factures FACᵢ, FACₘ et FACₚ et le mode de paiement MP sélectionné.

Si le mode de paiement MP est de proximité, tel que par exemple le paiement en liquidités, chèque, carte bancaire, tickets restaurant, ou tout autre moyen de paiement à disposition du fournisseur FR, une fois que l'utilisateur UT a payé la totalité des factures FACᵢ, FACₘ et FACₚ à l'aide de ce mode de paiement, en S205₁, le terminal TERf envoie au dispositif DF, via le réseau RC, au moyen de son interface ICf, un message M'4 notifiant la validation du paiement du montant cumulé des factures FACᵢ, FACₘ et FACₚ, le message M'4 contenant l'identifiant ID_LIST et le montant cumulé des factures FACᵢ, FACₘ et FACₚ.

Si le mode de paiement MP est distant, tel que par exemple virement, prélèvement, paiement distant par carte bancaire, paiement 3D Secure, paiement via une facture d'abonnement téléphonique, paiement de mobile à mobile ou tout autre moyen de paiement distant spécifique, en S206₁, le dispositif DF met le terminal TERu en relation avec un serveur de paiement SP pour effectuer le paiement distant en communiquant au serveur de paiement SP l'identifiant ID_LIST et le montant cumulé des factures FACi, FACₘ et FACₚ.

En S207₁, le serveur de paiement SP envoie au dispositif DF un message M'5 notifiant la validation du paiement du montant cumulé des factures FACi, FACₘ et FACₚ, le message M'5 contenant l'identifiant ID_LIST et le montant cumulé des factures FACᵢ, FACₘ et FACₚ.

En S208₁, le dispositif DF enregistre le paiement effectué.

En S209₁, le dispositif DF active le module de mise à jour MAJ pour mettre à jour l'ensemble ENS_F, en faisant passer le statut « à payer » des factures FACᵢ, FACₘ et FACₚ au statut « payé », et réactualise le montant dû pour les factures non encore payées dans l'ensemble ENS_F.

En S210₁, le dispositif DF envoie aux terminaux TERu et TERf, via le réseau RC, au moyen de son interface IC, un message M'6 indiquant que le paiement des factures FACᵢ, FACₘ et FACₚ a été effectué. Le message M'6 contient à cet effet l'identifiant ID_LIST et un identifiant des factures FACᵢ, FACₘ et FACₚ.

### Description d'un troisième mode de réalisation d'un procédé de validation d'une transaction

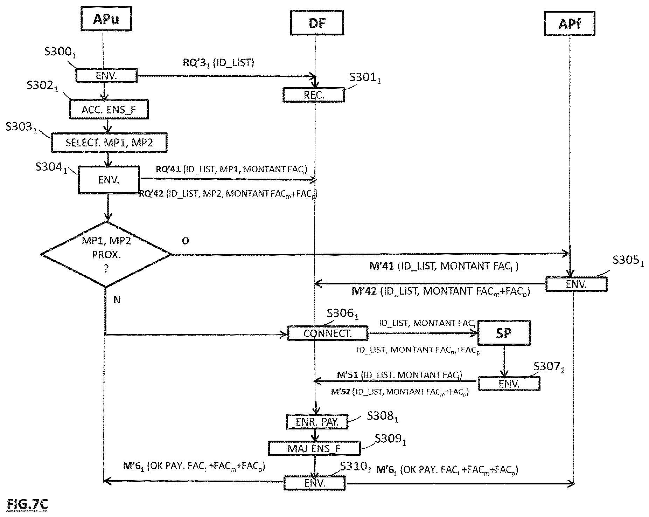

En référence à la figure 7C, on décrit maintenant le déroulement d'un procédé de validation d'une transaction selon un troisième mode de réalisation de l'invention, mis en œuvre dans le système de facturation de la figure 1.

Dans l'exemple illustré, la validation de la transaction correspond au paiement de plusieurs factures dans le statut « à payer » de l'ensemble de factures ENS_F, par exemple les factures FACᵢ, FACₘ et FACₚ, l'utilisateur UT utilisant au moins deux modes de paiement différents MP1 et MP2 pour le paiement de ces factures.

En S300₁, le terminal TERu envoie, via le réseau RC, au dispositif DF, au moyen de l'interface ICu, une requête RQ'3₁ de paiement du montant cumulé des factures FACᵢ, FACₘ et FACₚ. A cet effet, l'utilisateur UT active l'interface de consultation COu, et saisit l'identifiant ID_LIST.

L'envoi d'une telle requête RQ'3₁ est ici mis en œuvre à l'initiative de l'utilisateur UT, au moyen du terminal TERu. L'envoi de la requête RQ'3₁ peut être configuré comme décrit en relation avec le premier mode de réalisation précité.

En S301₁, le dispositif DF reçoit la requête RQ'3₁, via l'interface IC.

En S302₁, l'utilisateur UT accède, via l'interface COu de l'application APu, à l'ensemble de factures ENS_F comprenant notamment les factures FACᵢ, FACₘ et FACₚ dans le statut « à payer ».

En S303₁, l'utilisateur UT sélectionne, au moyen de l'interface SPu, le mode de paiement MP1 pour régler par exemple la facture FACᵢ et le mode de paiement MP2 pour régler par exemple les factures FACₘ et FACₚ.

Une telle sélection peut bien sûr être paramétrée par l'utilisateur UT avant même le déroulement du procédé de validation de la transaction, en tant que prérequis.

En S304₁, au moyen de l'interface DPu, l'utilisateur UT envoie au dispositif DF une requête RQ'41 d'activation du paiement de la facture FACᵢ, ladite requête RQ'41 contenant l'identifiant ID_LIST, le montant de la facture FACᵢ et le mode de paiement MP1 sélectionné.

Si le mode de paiement MP1 est de proximité, tel que par exemple le paiement en liquidités, chèque, carte bancaire, tickets restaurant, ou tout autre moyen de paiement à disposition du fournisseur FR, une fois que l'utilisateur UT a payé la facture FACᵢ à l'aide de ce mode de paiement, en S305₁, le terminal TERf envoie au dispositif DF, via le réseau RC, au moyen de son interface ICf, un message M'41 notifiant la validation du paiement du montant de la facture FACᵢ, le message M'41 contenant l'identifiant ID_LIST et le montant de la facture FACᵢ.

Si le mode de paiement MP1 est distant, tel que par exemple virement, prélèvement, paiement distant par carte bancaire, paiement 3D Secure, paiement via une facture d'abonnement téléphonique, paiement de mobile à mobile ou tout autre moyen de paiement distant spécifique, en S306₁, le dispositif DF met le terminal TERu en relation avec un serveur de paiement SP pour effectuer le paiement distant en communiquant au serveur de paiement SP l'identifiant ID_LIST et le montant de la facture FACᵢ.

En S307₁, le serveur de paiement SP envoie au dispositif DF un message M'51 notifiant la validation du paiement du montant de la facture FACᵢ, le message M'51 contenant l'identifiant ID_LIST et le montant de la facture FACᵢ.

En S308₁, le dispositif DF enregistre le paiement effectué.

Les étapes S303₁ à S308₁ sont ensuite itérées pour le deuxième mode de paiement MP2 sélectionné pour le paiement des factures FACₘ et FACₚ.

En S309₁, le dispositif DF active le module de mise à jour MAJ pour mettre à jour l'ensemble ENS_F, en faisant passer le statut « à payer » des factures FACᵢ, FACₘ et FACₚ au statut « payé », et réactualise le montant dû pour les factures non encore payées dans l'ensemble ENS_F.

En S310₁, le dispositif DF envoie aux terminaux TERu et TERf, via le réseau RC, au moyen de son interface IC, un message M'6₁ indiquant que le paiement des factures FACᵢ, FACₘ et FACₚ a été effectué. Le message M'6₁ contient à cet effet l'identifiant ID_LIST et un identifiant des factures FACᵢ, FACₘ et FACₚ.

Dans une application particulière des modes de réalisation décrits en figures 7A à 7C, le fournisseur FR est par exemple un épicier et l'utilisateur UT un client régulier de cet épicier, le client faisant des achats du quotidien auprès de cet épicier, à proximité de son domicile. Il réalise plusieurs achats par semaine, et une relation de confiance s'établit entre le client et l'épicier. L'épicier propose alors au client de régler l'ensemble des achats en fin de mois. A cet effet :
- Le client UT communique son identifiant IDu à l'épicier FR, ce qui lui donne l'autorisation d'ouvrir une liste d'achats auprès de son épicier, l'identifiant IDu étant par exemple l'identifiant d'une application de paiement installée sur le terminal TERu du client.
- Lorsque le client UT fait des achats, l'épicier FR ajoute la facture à la liste ENS_F et le client UT la valide s'il le souhaite.
- L'épicier informe le dispositif de facturation DF qu'il souhaite que son client fasse un paiement en fin de mois.
- En fin de mois, le dispositif de facturation DF informe le client UT qu'il doit régler sa liste de factures chez l'épicier.
- Le client UT choisit de faire un paiement distant depuis son application de paiement. Il peut, depuis chez lui, régler l'intégralité ou une partie seulement des factures pour le mois.
- L'épicier FR reçoit une notification en provenance du dispositif DF que son client a versé la somme due, et que l'argent est disponible sur son compte.

### Description détaillée d'un deuxième mode de réalisation de l'invention Environnement architectural

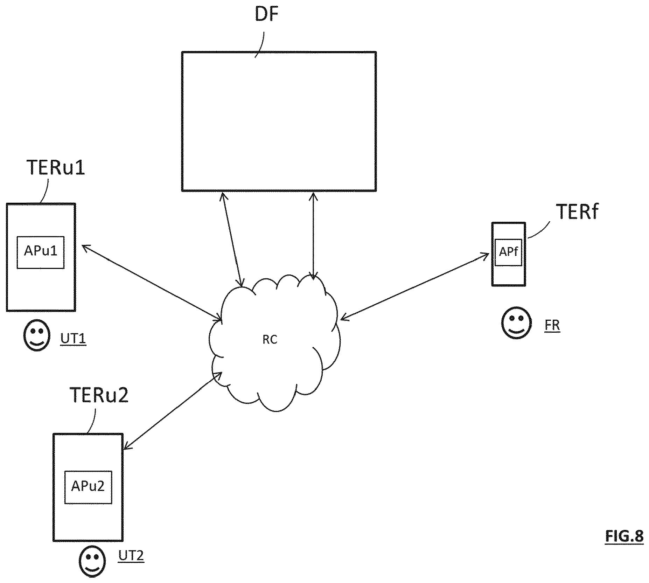

La figure 8 représente un environnement dans lequel est mis en œuvre le procédé de validation d'une transaction selon l'invention, dans un deuxième mode de réalisation.

Dans ce deuxième mode de réalisation, deux utilisateurs UT1 et UT2, au lieu d'un seul utilisateur UT, font des achats groupés auprès du fournisseur FR.

A cet effet, l'environnement de la figure 8 se distingue de celui représenté à la figure 1 par le fait qu'il comprend :
- un terminal de communication TERu1 associé à un utilisateur UT1, client du fournisseur FR,
- un terminal de communication TERu2 associé à un utilisateur UT2, également client du fournisseur FR, et réalisant des achats avec l'utilisateur UT1 de façon groupée.

Tous les autres éléments représentés sur la figure 8 étant identiques à ceux de la figure 1, ils ne sont pas à nouveau décrits et portent les mêmes références numériques.

Les terminaux TERu1 et TERu2 sont similaires au terminal TERu précité.

A cet effet, le terminal TERu1, respectivement TERu2, comprend une application logicielle (ou programme applicatif) APu1, respectivement APu2, pour interagir avec le dispositif de facturation DF, l'application APu1, respectivement APu2, étant dédiée à la mise en œuvre du procédé de validation d'une transaction conformément à la présente invention. L'application APu1, respectivement APu2, est téléchargée dans le terminal TERu1, respectivement TERu2, en amont de l'exécution du procédé de validation d'une transaction.

Le terminal TERu1, respectivement TERu2, est associé à un identifiant IDu1, respectivement IDu2, du même type que l'identifiant IDu précité.

### Description d'un mode de réalisation d'une phase préalable d'ajout de facture(s)

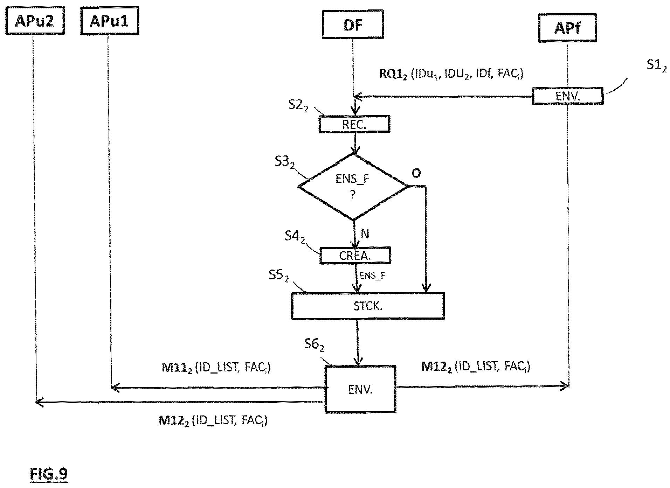

En référence à la figure 9, on décrit maintenant le déroulement d'un procédé d'ajout d'au moins une facture FACᵢ selon un mode de réalisation de l'invention, mis en œuvre dans le système de facturation de la figure 8.

Les utilisateurs UT1 et UT2, ainsi que le fournisseur FR, se sont préalablement inscrits auprès du dispositif de facturation DF, de la même manière que ce qui a déjà été expliqué ci-dessus en référence à la figure 5.

Conformément au deuxième mode de réalisation, lors de l'acquisition du bien et/ou du service auprès du fournisseur FR, les utilisateurs UT1 et UT2 ont partagé avec le fournisseur FR leur identifiant respectif IDu1, IDu2.

Une fois ces prérequis effectués, le procédé d'ajout de facture(s) comprend ce qui suit :
En S1₂, le terminal TERf envoie, via le réseau RC, au dispositif DF, au moyen de l'interface ICf, une requête RQ1₂ d'enregistrement de la facture FACᵢ correspondant à l'acquisition de manière groupée du bien et/ou du service, par les utilisateurs UT1 et UT2. A cet effet, le fournisseur FR active l'interface d'ajout AJ, saisit son identifiant IDf, l'identifiant IDu1, respectivement IDu2, préalablement communiqué par l'utilisateur UT1, respectivement UT2, lors de l'acquisition, et sélectionne la facture FACᵢ.

En S2₂, le dispositif DF reçoit la requête RQ1₂, via l'interface IC.

En S3₂, le dispositif DF vérifie, à partir des identifiants IDu1, IDu2 et IDf reçus, si l'ensemble ENS_F est déjà stocké dans ma mémoire M1.

Si l'ensemble ENS_F n'est pas encore stocké, en S4₂, le dispositif DF génère dans la mémoire M1, via le module CREA, un ensemble ENS_F, en lui affectant un identifiant ID_LIST qui est fonction des identifiants IDu1, IDu₂ et IDf reçus dans la requête RQ1₂. En variante, le dispositif DF pourrait générer l'ensemble ENS_F en lui affectant un premier identifiant ID_LIST1 qui est fonction des identifiants IDu1 et IDf et un deuxième identifiant ID_LIST2 qui est fonction des identifiants IDu2 et IDf.

En S5₂, le dispositif DF ajoute la facture FACᵢ reçue, via son module ADD, à l'ensemble ENS_F, en lui associant le statut « à payer ».

Si l'ensemble ENS_F est déjà stocké en mémoire M1, l'étape S5₂ est directement mise en œuvre à l'issue de l'étape S3₂.

En S6₂, le dispositif DF envoie aux terminaux TERu1, TERu2 et TERf, via le réseau RC, au moyen de son interface IC, un message M11₂, M12₂ et M1₂ notifiant respectivement l'utilisateur UT1, l'utilisateur UT2 et le fournisseur FR, qu'une facture FACᵢ a été ajoutée à l'ensemble ENS_F. Chacun de ces messages contient à cet effet l'identifiant ID_LIST et un identifiant de la facture FACᵢ. Chacun de ces messages contient éventuellement le statut « à payer » de la facture FACᵢ.

Dans le cas où deux identifiants ID_LIST1 et ID_LIST2 ont été affectés à l'ensemble ENS_F, en S6₂, le dispositif DF notifie ces deux identifiants dans le message M1₂ envoyé au terminal TERf, notifie l'identifiant ID_LIST1 dans le message M11₂ envoyé au terminal TER_U1 et notifie l'identifiant ID_LIST2 dans le message M12₂ envoyé au terminal TERu2.

### Description d'un mode de réalisation d'une phase préalable de validation de facture(s)

De façon similaire à ce qui a été décrit en référence à la figure 6, le procédé de validation de factures est mis en œuvre indépendamment par chaque terminal TERu1 et TERu2.

### Description d'un premier mode de réalisation d'un procédé de validation d'une transaction

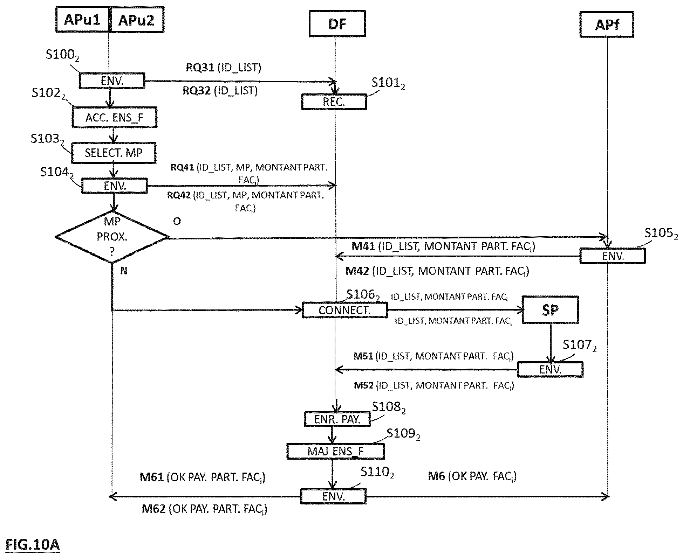

En référence à la figure 10A, on décrit maintenant le déroulement d'un procédé de validation d'une transaction selon un premier mode de réalisation de l'invention, mis en œuvre dans le système de facturation de la figure 8.

Dans l'exemple illustré, la validation de la transaction correspond au paiement d'une seule facture FACᵢ de l'ensemble de factures ENS_F, parmi d'autres factures à payer. L'utilisateur UT1 utilise son terminal TERu1 pour procéder au paiement du montant d'une partie de la facture FACᵢ, tandis que l'utilisateur UT2 utilise son terminal TERu2 pour procéder au paiement du montant de l'autre partie de la facture FACᵢ.

En S100₂, le terminal TERu1 envoie, via le réseau RC, au dispositif DF, au moyen de l'interface ICu, une requête RQ31 de paiement d'une partie seulement de la facture FACᵢ. A cet effet, l'utilisateur UT1 active l'interface de consultation COu, et saisit l'identifiant ID_LIST.

L'envoi d'une telle requête RQ31 est ici mis en œuvre à l'initiative de l'utilisateur UT1, au moyen du terminal TERu1.

D'autres implémentations pour l'étape S100₂ sont bien entendu possibles comme déjà décrit en liaison avec la figure 7A.

En S101₂, le dispositif DF reçoit la requête RQ31, via l'interface IC.

En S102₂, l'utilisateur UT1 accède, via l'interface COu de l'application APu1, à l'ensemble de factures ENS_F comprenant notamment la facture FACᵢ dans le statut « à payer ».

En S103₂, l'utilisateur UT1 sélectionne un mode de paiement MP au moyen de l'interface SPu.

Une telle sélection peut bien sûr être paramétrée par l'utilisateur UT1 avant même le déroulement du procédé de validation de la transaction, en tant que prérequis.

En S104₂, au moyen de l'interface DPu, l'utilisateur UT1 envoie au dispositif DF une requête RQ41 d'activation du paiement d'une partie du montant de la facture FACᵢ, ladite requête RQ41 contenant l'identifiant ID_LIST ou ID_LIST1 selon l'implémentation mise en œuvre, le montant d'une partie de la facture FACᵢ et le mode de paiement MP sélectionné.

Si le mode de paiement MP est de proximité, tel que par exemple le paiement en liquidités, chèque, carte bancaire, tickets restaurant, ou tout autre moyen de paiement à disposition du fournisseur FR, une fois que l'utilisateur UT1 a payé une partie de la facture FACᵢ à l'aide de ce mode de paiement, en S105₂, le terminal TERf envoie au dispositif DF, via le réseau RC, au moyen de son interface ICf, un message M41 notifiant la validation du paiement du montant d'une partie de la facture FACᵢ, le message M41 contenant l'identifiant ID_LIST (ou ID_LIST1 ) et le montant d'une partie de la facture FACᵢ.

Si le mode de paiement MP est distant, tel que par exemple virement, prélèvement, paiement distant par carte bancaire, paiement 3D Secure, paiement via une facture d'abonnement téléphonique, paiement de mobile à mobile ou tout autre moyen de paiement distant spécifique, en S106₂, le dispositif DF met le terminal TERu1 en relation avec un serveur de paiement SP pour effectuer le paiement distant en communiquant au serveur de paiement SP l'identifiant ID_LIST (ou ID_LIST1) et le montant d'une partie de la facture FACᵢ.

En S107₂, le serveur de paiement SP envoie au dispositif DF un message M51 notifiant la validation du paiement du montant d'une partie de la facture FACᵢ, le message M51 contenant l'identifiant ID_LIST (ou ID_LIST1) et le montant d'une partie de la facture FACᵢ.

En S108₂, le dispositif DF enregistre le paiement effectué.

Les étapes S100₂ à S108₂ sont itérées pour que l'utilisateur UT2 procède au paiement du montant de l'autre partie de la facture FACᵢ, l'aide d'un mode de paiement de son choix, en utilisant les identifiants ID_LIST ou ID_LIST2 selon l'implémentation mise en œuvre.

En S109₂, le dispositif DF active le module de mise à jour MAJ pour mettre à jour l'ensemble ENS_F, en faisant passer le statut « à payer » de la facture FACᵢ au statut « payé », et réactualise le montant dû pour les factures non encore payées dans l'ensemble ENS_F.

En S110₂, le dispositif DF envoie à chacun des terminaux TERu1, TERu2 et TERf, via le réseau RC, au moyen de son interface IC, un message M61, M62 et M6 indiquant que le paiement de la facture FACᵢ a été effectué. Chaque message contient à cet effet l'identifiant ID_LIST et un identifiant de la facture FACᵢ.

### Description d'un deuxième mode de réalisation d'un procédé de validation d'une transaction

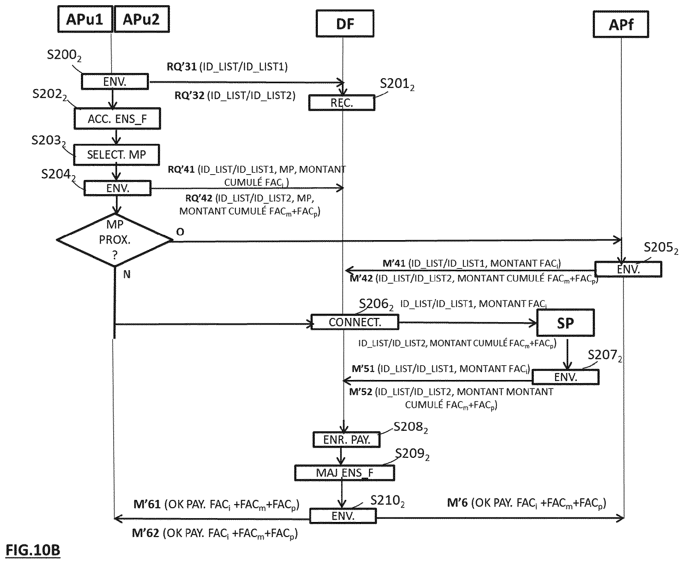

En référence à la figure 10B, on décrit maintenant le déroulement d'un procédé de validation d'une transaction selon un deuxième mode de réalisation de l'invention, mis en œuvre dans le système de facturation de la figure 8.

Dans l'exemple illustré, la validation de la transaction correspond au paiement de plusieurs factures de l'ensemble de factures ENS_F, par exemple les trois factures FACᵢ, FACₘ et FACₚ. Selon un exemple, l'utilisateur UT1 utilise son terminal TERu1 pour procéder au paiement du montant de la facture FACᵢ, tandis que l'utilisateur UT2 utilise son terminal TERu2 pour procéder au paiement du montant des factures FACₘ et FACp.

En S200₂, le terminal TERu1 envoie, via le réseau RC, au dispositif DF, au moyen de l'interface ICu, une requête RQ'31 de paiement de la facture FACᵢ. A cet effet, l'utilisateur UT1 active l'interface de consultation COu, et saisit l'identifiant ID_LIST ou ID_LIST1 selon l'implémentation mise en œuvre.

En S201₂, le dispositif DF reçoit la requête RQ'31, via l'interface IC.

En S202₂, l'utilisateur UT1 accède, via l'interface COu de l'application APu1, à l'ensemble de factures ENS_F comprenant notamment la facture FACᵢ dans le statut « à payer ».

En S203₂, l'utilisateur UT1 sélectionne un mode de paiement MP au moyen de l'interface SPu.

Une telle sélection peut bien sûr être paramétrée par l'utilisateur UT1 avant même le déroulement du procédé de validation de la transaction, en tant que prérequis.

En S204₂, au moyen de l'interface DPu, l'utilisateur UT1 envoie au dispositif DF une requête RQ'41 d'activation du paiement du montant de la facture FACᵢ, ladite requête RQ'41 contenant l'identifiant ID_LIST ou ID_LIST1 selon l'implémentation mise en œuvre, le montant de la facture FACᵢ et le mode de paiement MP sélectionné.

Si le mode de paiement MP est de proximité, tel que par exemple le paiement en liquidités, chèque, carte bancaire, tickets restaurant, ou tout autre moyen de paiement à disposition du fournisseur FR, une fois que l'utilisateur UT1 a payé la facture FACᵢ à l'aide de ce mode de paiement, en S205₂, le terminal TERf envoie au dispositif DF, via le réseau RC, au moyen de son interface ICf, un message M'41 notifiant la validation du paiement du montant de la facture FACᵢ, le message M'41 contenant l'identifiant ID_LIST (ou ID_LIST1) et le montant de la facture FACᵢ.

Si le mode de paiement MP est distant, tel que par exemple virement, prélèvement, paiement distant par carte bancaire, paiement 3D Secure, paiement via une facture d'abonnement téléphonique, paiement de mobile à mobile ou tout autre moyen de paiement distant spécifique, en S206₂, le dispositif DF met le terminal TERu1 en relation avec un serveur de paiement SP pour effectuer le paiement distant en communiquant au serveur de paiement SP l'identifiant ID_LIST (ou ID_LIST1) et le montant de la facture FACᵢ.

En S207₂, le serveur de paiement SP envoie au dispositif DF un message M'51 notifiant la validation du paiement du montant de la facture FACᵢ, le message M'51 contenant l'identifiant ID_LIST (ou ID_LIST1) et le montant de la facture FACᵢ.

En S208₂, le dispositif DF enregistre le paiement effectué.

Les étapes S200₂ à S208₂ sont itérées pour que l'utilisateur UT2 procède au paiement du montant cumulé des factures FACₘ et FACₚ, l'aide d'un mode de paiement MP de son choix, en utilisant les identifiants ID_LIST ou ID_LIST2 selon l'implémentation mise en œuvre.

En S209₂, le dispositif DF active le module de mise à jour MAJ pour mettre à jour l'ensemble ENS_F, en faisant passer le statut « à payer » des factures FACᵢ, FACₘ et FACₚ au statut « payé », et réactualise le montant dû pour les factures non encore payées dans l'ensemble ENS_F.

En S210₂, le dispositif DF envoie à chacun des terminaux TERu1, TERu2 et TERf, via le réseau RC, au moyen de son interface IC, un message M'61, M'62 et M'6 indiquant que le paiement des factures FACᵢ, FACₘ et FACₚ a été effectué. Chaque message contient à cet effet l'identifiant ID_LIST ou bien ID_LIST1 et/ou ID_LIST2 et un identifiant des factures FACᵢ, FACₘ et FACₚ.

Les modes de réalisation qui viennent d'être décrits ci-dessus ont été décrits à titre d'exemples non limitatifs. De nombreuses variantes sont bien entendu possibles. Par exemple, le procédé de validation d'une transaction représenté sur les figures 10A et 10B n'est pas limité à deux terminaux utilisateurs UT1 et UT2. Plus de deux utilisateurs, et donc plus de deux terminaux TERu1 et TERu2, peuvent être envisagés pour réaliser des achats groupés auprès d'un même fournisseur FR. Dans une autre implémentation possible, plusieurs fournisseurs, et donc plusieurs terminaux de fournisseurs, peuvent également, être impliqués dans le système de facturation de la figure 8 pour réaliser des ventes groupées auprès d'un seul utilisateur ou de plusieurs utilisateurs.

Dans une application particulière des modes de réalisation décrits en figures 10A et 10B, le fournisseur FR est par exemple un restaurateur, tandis que les utilisateurs UT1 et UT2 sont par exemple deux collègues de travail qui déjeunent régulièrement le midi dans le restaurant tenu par ce restaurateur. Le restaurateur FR leur propose d'ouvrir une liste et de régler par exemple à la fin de la semaine.

A cet effet :
- Les deux collègues UT1 et UT2 créent une liste partagée et en fournissent l'identifiant ID_LIST (ou respectivement ID_LIST1 et ID_LIST2) au restaurateur FR.
- Après chaque repas, le restaurateur FR envoie au dispositif DF, via son terminal TERf, la facture pour les deux repas pris, ladite facture étant ajoutée à la liste de factures ENS_F.
- Le vendredi, les collègues UT1 et UT2 choisissent d'eux-mêmes de payer les factures de la semaine. Le collègue UT1 paie la moitié du montant cumulé des factures de la semaine, par exemple par un paiement par carte bancaire, via le terminal de paiement électronique du restaurateur, et l'autre collègue UT2 décide de faire par exemple un virement SEPA instantané pour payer l'autre moitié de ces factures.
- Le restaurateur, via son terminal TERf, notifie le dispositif DF qu'il a bien reçu les deux paiements.

## Revendications

1. Procédé de validation d'une transaction relative à une offre d'un bien ou d'un service à au moins un utilisateur (UT), une facture ayant été générée pour ladite offre, dans lequel ledit procédé est mis en œuvre dans un terminal associé audit utilisateur, **caractérisé en ce qu'**il comprend ce qui suit, de manière différée par rapport à ladite offre :
- accéder (S102₁ ; S202₁ ; S302₁), via un réseau de communication, à un dispositif de facturation, à l'aide d'un identifiant (ID_LIST) associé à un ensemble de factures comprenant ladite facture, les factures dudit ensemble étant relatives à des biens ou des services offerts audit utilisateur par un même fournisseur sur un certain laps de temps,
- requérir (S104₁ ; S204₁ ; S304₁) auprès du dispositif de facturation le paiement d'au moins ladite facture, en prenant en compte ledit identifiant, un mode de paiement, et un montant inscrit sur ladite au moins une facture.

2. Procédé de validation d'une transaction selon la revendication 1, dans lequel ladite au moins une facture fait partie d'une pluralité de factures à payer dans ledit ensemble, ladite requête de paiement (S304₁) prend en compte ledit identifiant, ledit mode de paiement (MP1) pour certaines des factures à payer de ladite pluralité, le montant cumulé desdites certaines factures, et au moins un autre mode de paiement (MP2) pour les autres factures à payer de ladite pluralité, ainsi que le montant cumulé desdites autres factures.

3. Procédé de validation d'une transaction selon la revendication 1, dans lequel ladite au moins une facture fait partie d'une pluralité de factures à payer dans ledit ensemble, le procédé comprend ce qui suit au niveau d'un terminal (TERu2) associé à un autre utilisateur partageant avec ledit utilisateur le paiement des factures dudit ensemble :
- accéder (S202₂) au dispositif de facturation, via un réseau de communication, à l'aide dudit identifiant ou bien d'un autre identifiant associé audit ensemble de factures, ledit identifiant ou ledit autre identifiant étant associé audit autre utilisateur,
- requérir (S202₂, RQ'42) auprès du dispositif de facturation le paiement d'au moins une autre facture dudit ensemble, différente de ladite au moins une facture, en prenant en compte ledit identifiant ou ledit autre identifiant, un mode de paiement associé à ladite au moins une autre facture, et un montant inscrit sur ladite au moins une autre facture.

4. Procédé de validation d'une transaction selon l'une quelconque des revendications 1 à 3, dans lequel l'instant de déclenchement de l'action de requérir un paiement auprès du dispositif de facturation est paramétrable dans le dispositif de facturation.

5. Procédé de validation d'une transaction selon l'une quelconque des revendications 1 à 4, dans lequel ledit ensemble de factures étant associé à un identifiant d'un fournisseur ayant fourni le bien ou le service audit au moins un utilisateur, il comprend ce qui suit au niveau du dispositif de facturation :
- recevoir en provenance d'un terminal associé audit fournisseur, via un réseau de communication, un message indiquant que le paiement de ladite au moins une facture ou desdites factures dudit ensemble a été effectué auprès dudit fournisseur,
- mettre à jour ledit ensemble de factures, distinguant le ou les factures encore à payer de ladite au moins une facture ou desdites factures payées.

6. Terminal de communication (TERu) pour mettre en œuvre la validation d'une transaction relative à une offre d'un bien ou d'un service à au moins un utilisateur, une facture ayant été générée pour ladite offre, ledit terminal étant associé audit utilisateur et comprenant un processeur (UTR3) qui est configuré pour mettre en œuvre ce qui suit, de manière différée par rapport à ladite offre :
- accéder, via un réseau de communication, à un dispositif de facturation, à l'aide d'un identifiant associé à un ensemble de factures comprenant ladite facture, les factures dudit ensemble étant relatives à des biens ou des services offerts audit utilisateur par un même fournisseur sur un certain laps de temps,
- requérir auprès du dispositif de facturation le paiement d'au moins ladite facture, en prenant en compte ledit identifiant, un mode de paiement, et un montant inscrit sur ladite au moins une facture.

7. Dispositif de facturation (DF) comprenant une mémoire de stockage de factures, ledit dispositif étant **caractérisé en ce qu'**il comprend un processeur (UTR1) qui est configuré pour mettre en œuvre ce qui suit, de manière différée par rapport à une offre d'un bien ou d'un service à au moins un utilisateur par un fournisseur :
- générer une facture relative à ladite offre, en réponse à une requête reçue en provenance d'un terminal associé audit fournisseur, ladite requête contenant un identifiant dudit au moins un utilisateur et un identifiant dudit fournisseur,
- stocker la facture dans ladite mémoire, ladite facture étant ajoutée à un ensemble de factures qui sont relatives à des biens ou des services offerts audit au moins un utilisateur par ledit fournisseur pendant un certain laps de temps, ledit ensemble étant associé à un identifiant dépendant des identifiants reçus dans la requête,
- recevoir en provenance d'un terminal associé audit au moins utilisateur, via un réseau de communication :
--une requête d'accès au dispositif de facturation, ladite requête d'accès comprenant l'identifiant associé audit ensemble,
- une requête de paiement d'au moins ladite facture dudit ensemble, en prenant en compte l'identifiant associé audit ensemble, un mode de paiement, et un montant inscrit sur ladite au moins une facture,
- activer ledit paiement en réponse à la requête de paiement reçue.

8. Système de facturation, **caractérisé en ce qu'**il comprend :
- un terminal de communication selon la revendication 6,
- un dispositif de facturation selon la revendication 7.

9. Programme d'ordinateur comportant des instructions de code de programme pour la mise en œuvre du procédé de validation d'une transaction selon l'une quelconque des revendications 1 à 5, lorsqu'il est exécuté sur un ordinateur.

10. Support d'informations lisible par un ordinateur, et comportant des instructions d'un programme d'ordinateur selon la revendication 9.
